# EUROPÄISCHE PATENTANMELDUNG

(11) **EP 1 035 461 A2**
(43) Veröffentlichungstag der Anmeldung: **13.09.2000**
(21) Anmeldenummer: 00104914.7
(22) Anmeldetag: 08.03.2000
(51) Int. Cl.: G06F 1/00

(54) **Terminal für gesichertes Bestätigen von Daten und Verfahren hierzu**

(30) Priorität: 11.03.1999 AT 43599
(71) Anmelder: BDC - EDV Consulting GmbH, 1020 Wien (AT)
(72) Erfinder: Biely, Helmut, Dipl. Ing., 3411 Weidling (AT); Dillinger, Klaus, Dipl. Ing., 3100 St. Pölten (AT)
(74) Vertreter: Grabherr, Claudia, Dipl.Ing.

(57) **Zusammenfassung**

Bei einem mikroprozessorgesteuerten Terminal (10) zum gesicherten Bestätigen von in einem Computersystem (5) erzeugten Daten, das über beliebige Schnittstellen am Computersystem (5) angeschlossen ist, sind ein gegen unautorisierte Softwareeinbringung abgesichertes bzw. proprietäres Betriebssystem, eine Schnittstelle (1) zur Aufnahme eines persönlichen Datenverarbeitungselementes des Benützers, vorzugsweise einer Smartcard, eine Tastatur (3) zur Eingabe des persönlichen Code des Benutzers, zur Steuerung des Terminals und/oder zur Dateneingabe, ein Bildschirm (2) beliebiger Größe und Bauart, optional Hard- und Software zur biometrischen Benutzerauthentifizierung und Software zur Anzeige und Bearbeitung der vom Computersystem (5) an das Terminal (10) übertragenen Daten sowie zum Lesen und gegebenenfalls auch zum Bearbeiten der Daten auf dem persönlichen Datenverarbeitungselement, vorgesehen. Zu bestätigende Daten werden in dieses Terminal (10) ausgelagert, an dessen Bildschirm (2) angezeigt und vom Benutzer bestätigt. Gegebenenfalls werden vom Benutzer Transaktionen mit dem persönlichen Datenverarbeitungselement freigegeben und die bestätigten Daten werden mit den Transaktionsdaten an das Computersystem (5) zurückgegeben.

## Beschreibung

Die Erfindung betrifft ein Terminal für gesichertes Bestätigen von Daten, wie für das Anbringen einer digitalen Signatur an elektronischen Dokumenten und/oder für Zahlvorgänge mit elektronischen Zahlungsmitteln sowie ein Verfahren zum gesicherten Bestätigen von Daten.

Unter "digitaler Signatur" versteht man ein Verfahren, mit welchem die Echtheit elektronischer Dokumente und Dateien beliebiger Art sichergestellt werden kann. Das Verfahren beruht auf einem asymmetrischen Verschlüsselungsalgorithmus.

Für jeden Beteiligten am Signatursystem wird ein Schlüsselpaar generiert, ein geheimer und ein öffentlicher Schlüssel, die in einem bestimmten mathematischen Verhältnis zueinander stehen. Zum Erzeugen der digitalen Signatur benutzt der Absender seinen geheimen Schlüssel, praktisch als spezielles Unterschriftsmerkmal. Der zu unterschreibende Text wird zunächst mit einem sogenannten Hash-Verfahren komprimiert, das so entstandene Komprimat nach einem vorgegebenen Algorithmus mit dem geheimen Schlüssel verknüpft und das Ergebnis als digitale Signatur dem zu übertragenden Brief angehängt. Der Empfänger komprimiert nun ebenfalls den Text und vergleicht dieses Komprimat mit dem in der digitalen Signatur enthaltenen Komprimat, das sich durch Entschlüsseln der Signatur mit dem öffentlichen Schlüssel des Absenders ergibt. Bei Übereinstimmung steht fest, daß der gesendete und empfangene Text gleich sind, es also weder Manipulationen noch Übertragungsfehler gegeben hat. Es steht aber auch fest, daß nur der Absender, der im Besitz des geheimen Schlüssels ist, die Signatur erzeugt haben kann, weil sonst der öffentliche Schlüssel nicht "passen" würde, also keine Transformation auf das ursprüngliche Komprimat hätte erfolgen können.

Die Kommunikationspartner erhalten dabei zunächst jeweils ein individuelles Schlüsselpaar, bestehend aus einem öffentlichen und einem dazu komplementären geheimen Schlüssel.

Die öffentlichen Schlüssel sind beiden Partnern bekannt und darüber hinaus im Prinzip auch jeden weiteren potentiellen Kommunikationspartner zugänglich. Die geheimen Schlüssel dagegen verbleiben beim einzelnen Kommunikationspartner, der sie sicher aufbewahrt (z.B. in einer persönlichen Chipkarte).

Neben der kryptologischen Sicherheit des angewandten Signaturverfahrens ist auch die Sicherheit der Implementierung eine wesentliche Voraussetzung für die rechtliche Relevanz digitaler Signaturen. Denn aus der Sicht des Anwenders ist eine digitale Signatur natürlich nur dann brauchbar, wenn er sich während des Signaturprozesses sicher sein kann, daß genau das, was er auf seinem Bildschirm vor sich sieht, signiert wird und nichts anderes ("What you see is what you sign"). In der Fachliteratur spricht man in diesem Zusammenhang auch von der Forderung nach einem sog. "Secure Viewer", also einem (Software-) System, das genau diese Sicherheitsfunktion garantieren soll.

In den verbreiteten offenen Systemarchitekturen für PCs ist diese Forderung aber nur sehr schwer zu erfüllen. Das Problem besteht darin, daß Computerviren, Trojanische Pferde oder andere unautorisierte Programme das Dokument vor der Signatur verfälschen können, ohne daß dies der Benutzer bemerkt. Der Benutzer würde in diesem Fall ein gefälschtes Dokument mit einer echten Unterschrift versehen. Was das z.B. für die Unterzeichnung von Verträgen oder die Abwicklung von Bankgeschäften bedeuten würde, läßt sich unschwer ausmalen. Für die gesetzliche Anerkennung digitaler Signaturen als rechtsgültige Unterschriften ist eine zufriedenstellende Lösung dieses Problems unbedingt erforderlich.

Bezüglich der digitalen Signatur ist es bekannt, daß Unterschriftssysteme entweder in Hard- oder in Software implementiert werden können. Eine bekannte Softwareimplementierung ist z.B. PGP "Prettty Good Privacy", für Hardwareimplementierungen werden in letzter Zeit zusehends Smart Cards mit entsprechenden Kartenlesern herangezogen.

Die Smart Cards sind üblicherweise mittels einer Geheimzahl (PIN) oder biometrischer Methoden gegen Mißbrauch gesichert. Signaturterminals enthalten einen Kartenleser zur Aufnahme der Smart-Card und optional auch eine Tastatur zur Eingabe der PIN bzw. Software zur Berechnung des Hash-Komprimats der zu signierenden Datei.

Diese Lösungen existieren für die unterschiedlichsten Systemumgebungen, lösen aber allesamt das oben adressierte Problem des Secure Viewer nicht. Denn auch eine Implementierung des Signaturverfahrens in einer Smart-Card sichert nur den Signaturvorgang selbst, schützt aber nicht vor einer unautorisierten Veränderung der zu signierenden Datei durch z.B.Computerviren vor dem eigentlichen Signaturvorgang.

Bekannt sind auch Softwarelösungen für Secure Viewer für unterschiedlichste Dateiformate. Diese bieten jedoch entweder keinen ausreichenden Schutz gegen unautorisierte Programme oder setzen bestimmte sichere Betriebssysteme voraus. Eine solche Lösung bietet allenfalls einen gewissen Schutz des eigenen PCs des Benutzers. Einen sicheren Signaturvorgang an öffentlichen Terminals kann sie aber nicht ermöglichen. In einer offenen Systemumgebung kann der Benutzer auf dem Bildschirm grundsätzlich nicht erkennen, ob ein Secure Viewer oder ein unautorisiertes Programm aktiv ist.

Das Bezahlen mit elektronischen Zahlungsmitteln, wie Kreditkarte, Bankomatkarte oder elektronischer Geldbörse, ist sehr beliebt. In den letzten Jahren setzt sich vor allem die elektronische Geldbörse immer mehr durch. Darunter versteht man ein Zahlungsverfahren, bei dem der Kunde Geldbeträge von seinem Bankkonto in die elektronische Geldbörse laden kann. Im allgemeinen ist die elektronische Geldbörse in einer Smart Card implementiert, welche von einer Bank ausgegeben wird. Der Ladevorgang erfolgt normalerweise in einer Online-Transaktion zum Bankrechner. Dabei tritt die elektronische Geldbörse zum authentifizierten Laden des Geldbetrags in eine kryptografische End-zu-End-Sitzung mit einem Sicherheitsmodul der Bank. Der Zahlungvorgang erfolgt hingegen im allgemeinen offline und ohne PIN-Eingabe. Bei der Zahlung tritt die elektronische Geldbörse in eine kryptografische Interaktion mit einer speziellen Karte des Zahlungspartners (Händlers). Der Transaktionsbetrag wird vom in der elektronischen Geldbörse gespeicherten Guthaben abgebucht und der Karte des Händlers gutgeschrieben. Da sämtliche Interaktionen durch kryptografische End-zu-End-Protokolle abgesichert sind, spielt die Entfernung und Systeminfrastruktur der Transaktionspartner sicherheitstechnisch keine Rolle. Sowohl die Ladung als auch die Zahlung kann daher über potentiell unsichere Medien (z.B. Internet) erfolgen, ohne daß eine Gefahr für die Systemsicherheit besteht. Die elektronische Geldbörse ist daher grundsätzlich für sichere Zahlungen in solchen Medien sehr gut geeignet.

Sieht man die Sicherheitsaspekte bei Zahlungen mit der elektronischen Geldbörse in unsicheren Medien (z.B. Internet) an, erkennt man, wie gesagt, daß die elektronische Geldbörse vom kryptologischen Standpunkt her grundsätzlich sichere Zahlungen im Internet ermöglicht. Im Prinzip benötigt man dafür nur einen Smart Card Reader samt geeigneter Software, der an den PC des Kunden angeschlossen wird. Doch stellt sich - in Analogie zum Problem "What you see is what you sign" bei der digitalen Signatur - hier das Problem "What you see is what you pay". Der Kunde muß beim Zahlvorgang sicher sein, daß ihm nur der am Bildschirm angezeigte und von ihm freigegebene Betrag von der elektronischen Geldbörse abgebucht wird. Bei Zahlungen an Bankterminals und an Zahlungsterminals in Geschäften ist dies insofern sichergestellt, als das Terminal konstruktionsbedingte Vorkehrungen gegen Manipulationen aufweist und Hersteller sicherheitstechnische Gutachten vorlegen müssen. In einer unsicheren Umgebung wie dem Internet ist dies jedoch grundsätzlich anders. Das Problem besteht darin, daß Internet-Programme betrügerischer Händler oder unautorisierte Programmroutinen (Viren, Trojanische Pferde, etc.) auf dem PC des Anwenders die Betragsanzeige verfälschen können. Die Folge: Dem Kunden wird ein höherer Betrag von seiner Geldbörse abgebucht, als er tatsächlich freigegeben hat. Solche Manipulationen können erst nach der Transaktion durch eine Überprüfung des Börsensaldos festgestellt werden. Für den Anwender ist es im allgemeinen unmöglich, derartige zu Unrecht abgebuchte Beträge zurück zu erhalten, da es sich bei der elektronischen Geldbörse um eine anonyme Zahlungsmethode ohne Aufzeichnung von Einzeltransaktionen handelt.

Die vorliegende Erfindung löst sowohl das Problem des Secure Viewers als auch der sicheren Zahlung mit einem elektronischen Zahlungsmittel, wie der elektronischen Geldbörse bzw. einer Kredit- oder Debitkarte auf Smart Card-Basis, indem es den zu signierenden Text bzw. den abzubuchenden Betrag aus dem Computersystem, mit dem die zu signierenden Daten bzw. die Rechnungsbeträge erstellt werden, in eine separate Hardware auslagert.

Erfindungsgemaß ist ein mikroprozessorgesteuertes Terminal zum gesicherten Bestätigen von in einem Computersystem erzeugten Daten vorgesehen, das über beliebige Schnittstellen am Computersystem angeschlossen ist, ein gegen unautorisierte Softwareeinbringung abgesichertes bzw. proprietäres Betriebssystem, eine Schnittstelle zur Aufnahme eines persönlichen Datenverarbeitungselementes des Benützers, vorzugsweise einer Smartcard, eine Tastatur zur Eingabe des persönlichen Code des Benutzers, zur Steuerung des Terminals und/oder zur Dateneingabe, einen Bildschirm beliebiger Größe und Bauart, optional Hard- und Software zur biometrischen Benutzerauthentifizierung und Software zur Anzeige und Bearbeitung der vom Computersystem an das Terminal übertragenen Daten sowie zum Lesen und gegebenenfalls auch zum Bearbeiten der Daten auf dem persönlichen Datentverarbeitungselement aufweist.

Vorzugsweise ist das persönliche Datenverarbeitungselement des Benützers ein Signaturtoken und die Bearbeitungssoftware ist unter anderem Software zur Anzeige von gängigen Dateiformaten auf dem eingebauten Bildschirm, vorzugsweise Formate von Text-, Tabellenkalkulations-Grafik-, oder Bankdateien, und Software, durch die auf Veranlassung des Benutzers ein Signaturvorgang unter Verwendung des vorn Benutzer eingeführten Signaturtokens durchgeführt wird und die resultierenden Signaturdaten an das Computersystem ausgegeben werden.

Optional enthält das Terminal die erforderliche Hard- und Software für die Durchführung von Signaturen fix, stell also selbst ein Signaturtoken mit eingebautem Dateiviewer dar.

Dabei wird insbesondere bevorzugt, daß Software vorgesehen ist, die sicherstellt, daß von außen keinerlei lauffähige Softwareprogramme eingebracht werden können, es sei denn, die Softwareprogramme weisen eine korrekte digitale Signatur einer Trusted Party auf, vorzugsweise des Herstellers des Terminals oder des Betreibers des Signatursystems.

Ist das persönliche Datenverarbeitungselement des Benützers ein elektronisches Zahlungsmittel, wie eine elektronische Geldbörse, so enthält die Bearbeitungssoftware unter anderem Software zur Interpretation von Transaktionen mit dem elektronischen Zahlungsmittel, wie der elektronischen Geldbörse, zur Anzeige der relevanten Daten auf dem eingebauten Bildschirm und zur Steuerung von Transaktionen mit dem elektronischen Zahlungsmittel, wie der elektronische Geldbörse.

Dabei wird die angezeigte Zahlungs- oder Ladetransaktion auf Veranlassung des Benutzers unter Verwendung des elektronische Zahlungsmittels, wie der elektronischen Geldbörse freigegeben.

Bei dem erfindungsgemäßen Verfahren zum gesicherten Bestätigen von in einem Computersystem erzeugten Daten werden die Daten in die separate Hardware eines mikroprozessorgesteuerten Terminals ausgelagert, das ein gegen unautorisierte Softwareeinbringung abgesichertes bzw. proprietäres Betriebssystem und Bearbeitungssoftware enthält, worauf die Daten auf einem Bildschirm des Terminals angezeigt werden, vom Benutzer bestätigt werden und die bestätigten Daten an das Computersystem zurückgegeben werden.

Wenn die Daten zu signierende Dateien sind, die am Bildschirm des Terminals durch die Bearbeitungssoftware, vorzugsweise im Format einer Text-, Tabellen-, Kalkulations-, Grafik oder Bankdatei angezeigt werden, wird die Datei erfindungsgemäß gegebenenfalls nach Authentifizierung des Benutzers, z.B. durch Eingabe eines Benutzercodes über die Tastatur oder über eine Vorrichtung zur biometrischen Benutzerauthentifizierung im Terminal auf Veranlassung des Benutzers einem Signaturvorgang unter Verwendung eines vom Benutzer dem Terminal übergebenen oder im Terminal fix integrierten Signaturtokens, vorzugsweise einer Smart Card, unterworfen und die signierte Datei wird an das Computersystem zurückgegeben.

Wird erfindungsgemäß der elektronische Zahlungsvorgang mit einer elektronischen Geldbörse oder einem sonstigen elektronischen Zahlungsmittel, das auf persönlichen Datenverarbeitungselementen (z.B.in Form einer Smart Card) beruht, durchgeführt, die vom Benutzer dem Terminal übergeben wurde, gibt die Bearbeitungssoftware den durch die bestätigten Daten gegebenen Betrag für die gewünschte Transaktion mit dem elektronischen Zahlungsmittel frei.

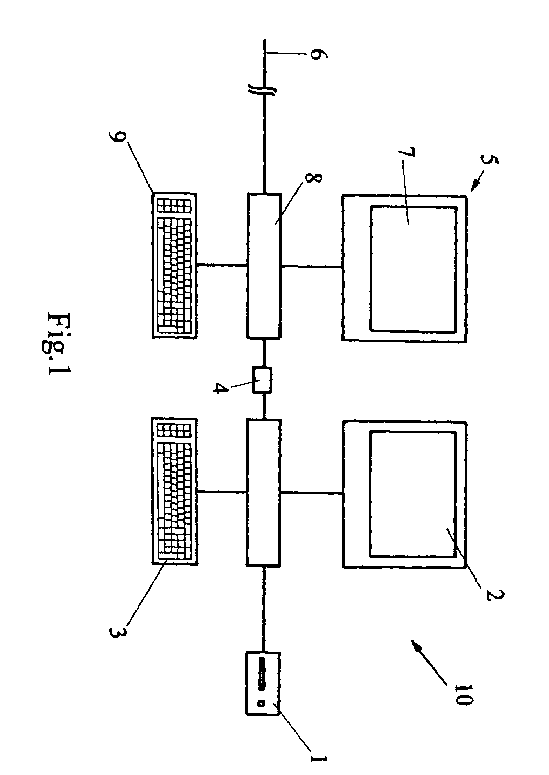

Dieses Bestätigungsterminal 10, wie es schematisch in Fig.1 dargestellt ist, enthält unter anderem die folgenden Komponenten:
- ein Interface 1 zur Aufnahme eines persönlichen Datenverarbeitungselementes wie des Signatur-Tokens des Anwenders, also beispielsweise einen Smart Card Reader (falls eine Smartcard als Signaturtoken verwendet wird),
- alternativ oder zusätzlich ein Interface (Smart Card Reader) für das elektronische Zahlungsmittel wie die elektronische Geldbörse des Anwenders,
- einen Bildschirm 2 (z.B. LCD-Display) für die Anzeige des zu signierenden Dokuments bzw. der Transaktionsdaten mit dem elektronischen Zahlungsmittel, wie der elektronischen Geldbörse,
- eine Tastatur 3 zur Eingabe der PIN (für Signatur) bzw. zur Freigabe von Zahlungen mit der Elektronischen Geldbörse und zur Steuerung des Terminals 10,
- optional Hardware für die Benutzerauthentifizierung mittels biometrischer Verfahren,
- ein Standardinterface 4 zum Computer 5 in beliebiger Ausprägung (z.B. serielle Schnittstelle, Infrarot, Netzwerk, etc.),
- Viewer- Software für die Darstellung von Dokumenten in beliebigen Dateiformaten (z.B. Textverarbeitungsdateien, Tabellenkalkulationsdateien, Grafikdateien, Bank-Überweisungsdaten, Buchhaltungsdaten, etc.),
- Software zur Erstellung des für die Signatur erforderlichen Hash-Komprimats nach verschiedenen Algorithmen,
- Software für die Interpretation und Steuerung sämtlicher Transaktionen mit dem elektronischen Zahlungsmittel, wie der elektronischen Geldbörse.

Das Bestätigungsterminal 10 besitzt ein proprietäres Betriebssystem und erlaubt es nicht, ausführbare Programme von außen zu laden. Aus diesem Grund können von Dritten keine unautorisierten Programme (Viren, Trojanische Pferde) in das Terminal 10 geschmuggelt werden. Die auf dem Bildschirm 2 des Terminals 10 dargestellten Dateiinhalte stimmen daher vollkommen mit der zu signierenden elektronischen Datei bzw. mit den Transaktionsdaten der elektronische Geldbörse überein. Die Forderungen "What you see is what you sign" bzw "What you see is what you pay" sind daher erfüllt.

Softwareupdates für das Bestätigungsterminal 10 (z.B. Änderung oder Hinzufügen von Viewerprogrammen, Unterstützung weiterer Signaturverfahren, Unterstützung weiterer Börsen etc.) erfolgen ausnahmslos in authentifizierter Form. Das heißt, daß jede Software, die von außen in das Terminal geladen wird, vom Hersteller des Terminals bzw. Systembetreiber digital signiert sein muß. Beim Einbringungsprozeß überprüft das Terminal 10 diese digitale Signatur und akzeptiert nur Updates mit einem positiven Prüfergebnis. Updates mit einem negativen Ergebnis werden als unautorisiert abgelehnt. Auf diese Weise ist die völlige Softwareintegrität sichergestellt.

Natürlich können Hard- und Software des Terminals 10 und sein Softwaremanagement auch den Zertifizierungsverfahren unterzogen werden, wie sie im Rahmen der sich abzeichnenden Signaturgesetze vorgesehen sind.

Das Terminal kann nach Art eines PDA (Personal Digital Assistant) auch tragbar gestaltet sein, bzw. ist es auch denkbar, die Funktionen des Signaturterminals in einen Standard-PDA zu integrieren (zB Palm Pilot, PSION-Organiser, Cassiopeia, etc).

In das offene Computersystem 5 können Programme und Daten über die Datenleitung oder den Internetzugang 6 sowie über die Tastatur 9 und entsprechende Laufwerke eingebracht werden. Je nach Verwendung und Anforderung können die Daten vom Benutzer unter Kontrolle am Bildschirm 7 verändert werden, bis die gewünschten Dokumente bzw. der gewünschte Zahlungsvorgang angezeigt wird. Dann werden die Daten über das Interface 4 an das Terminal 10 abgegeben. Da das Terminal 10 ein proprietäres Betriebssystem aufweist, das es nicht erlaubt, ausführbare Programme von außen zu laden, die keine entsprechende digitale Signatur einer Trusted Party aufweisen, können normalerweise nur die reinen Daten übertragen werden, die dann unter Zuhilfnahme von im Terminal 10 vorhandenen Software im entsprechenden Format am Bildschirm 2 angezeigt werden. Das Angezeigte entspricht nun der Forderung, what you see is what you sign, bzw. what you see is what you pay und der Benutzer muß jetzt in das Interface 1, das z.B. als Smart Card Reader ausgebildet ist, sein persönliches Datenverarbeitungselement einbringen, d.h., z.B. seine Signaturkarte oder sein elektronisches Zahlungsmittel einstecken, gegebenenfalls über die Tastatur einen Benutzercode eingeben und den Bestätigungsvorgang durchführen. Handelt es sich dabei um einen Signaturvorgang, so wird das Dokument z.B. mit einer geeigneten Hash-Software komprimiert und mit der digitalen Signatur versehen. Das signierte, komprimierte Dokument wird dann über das Interface 4 an das Computersystem 5 zurückgegeben und kann von dort mit anderen Dateien kombiniert weitergeleitet werden. Handelt es sich bei dem Bestätigungsvorgang um einen Zahlungsvorgang, so muß, wenn erforderlich, auch über die Tastatur ein entsprechender Code eingegeben werden und der Betrag, der am Bildschirm 2 ausgewiesen ist, z.B. durch Betätigung einer Taste bestätigt werden. Ist das persönliche Datenverarbeitungselement ein elektronisches Zahlungsmittel, so kann eine geeignete Software auf dem Terminal 10 die Transaktion zwischen dem Computersystem 5 und dem elektronischen Zahlungsmittel freigeben. Der Benutzer kann sich sicher sein, daß er tatsächlich das Dokument, das er am Bildschirm 2 gesehen hat, signiert hat bzw. den Zahlungsbetrag, den er am Bildschirm 2 gesehen hat, gezahlt hat.

## Patentansprüche

1. Mikroprozessorgesteuertes Terminal zum gesicherten Bestätigen von in einem Computersystem erzeugten Daten, wobei das Terminal über beliebige Schnittstellen am Computersystem angeschlossen ist, dadurch gekennzeichnet, daß das Terminal (10) ein gegen unautorisierte Softwareeinbringung abgesichertes bzw. proprietäres Betriebssystem, eine Schnittstelle (1) zur Aufnahme eines persönlichen Datenverarbeitungselementes des Benützers, vorzugsweise einer Smartcard, eine Tastatur (3) zur Eingabe des persönlichen Code des Benutzers, zur Steuerung des Terminals und/oder zur Dateneingabe, einen Bildschirm (2) beliebiger Größe und Bauart, optional Hard- und Software zur biometrischen Benutzerauthentifizierung und Software zur Anzeige und Bearbeitung der vom Computersystem an das Terminal (10) übertragenen Daten sowie zum Lesen und gegebenenfalls auch zum Bearbeiten der Daten auf dem persönlichen Datenverarbeitungselement, aufweist.

2. Terminal nach Anspruch 1, dadurch gekennzeichnet, daß das persönliche Datenverarbeitungselement des Benützers ein Signaturtoken ist und daß die Bearbeitungssoftware unter anderem Software zur Anzeige von gängigen Dateiformaten auf dem eingebauten Bildschirm (2), vorzugsweise Formate von Text-, Tabellenkalkulations- Grafik-, oder Bankdateien, und Software ist, durch die auf Veranlassung des Benutzers ein Signaturvorgang unter Verwendung des vorn Benutzer eingeführten Signaturtokens durchgeführt wird und durch die resultierende Signaturdaten an das Computersystem (5) ausgegeben werden.

3. Terminal nach Ansprüchen 1 und 2, dadurch gekennzeichnet, daß das Terminal (10) die erforderliche Hard- und Software für die Durchführung von Signaturen fix enthält, also selbst einen Signaturtoken mit eingebauten Dateiviewer darstellt.

4. Terminal nach den Ansprüchen 1 bis 3, dadurch gekennzeichnet, daß Software vorgesehen ist, die sicherstellt, daß von außen keinerlei lauffähige Softwareprogramme eingebracht werden können, es sei denn, die Softwareprogramme weisen eine korrekte digitale Signatur einer Trusted Party auf, vorzugsweise des Herstellers des Terminals oder des Betreibers des Signatursystems.

5. Terminal nach Anspruch 1, dadurch gekennzeichnet, daß das persönliche Datenverarbeitungselement des Benützers ein elektronisches Zahlungsmittel, wie eine elektronische Geldbörse ist und daß die Bearbeitungssoftware unter anderem Software zur Interpretation von Transaktionen mit dem elektronischen Zahlungsmittel, wie der elektronischen Geldbörse, zur Anzeige der relevanten Daten auf den eingebauten Bildschirm und zur Steuerung von Transaktionen mit dem elektronischen Zahlungsmittel, wie der elektronische Geldbörse enthält.

6. Terminal nach Anspruch 5, dadurch gekennzeichnet daß die angezeigte Zahlungs- oder Ladetransaktion auf Veranlassung des Benutzers unter Verwendung des elektronische Zahlungsmittels, wie der elektronischen Geldbörse freigegeben bzw. durchgeführt wird.

7. Verfahren zum gesicherten Bestätigen von in einem Computersystem erzeugten Daten, dadurch gekennzeichnet, daß die Daten in die separate Hardware eines mikroprozeßgesteuerten Terminals (10) ausgelagert werden, das ein gegen unautorisierte Softwareeinbringung abgesichertes bzw. proprietäres Betriebssystem und Bearbeitungssoftware enthält, daß die Daten auf einem Bildschirm (2) des Terminals (10) angezeigt werden, vom Benutzer bestätigt werden und daß die bestätigten Daten an das Computersystem (5) zurückgegeben werden.

8. Verfahren nach Anspruch 7, dadurch gekennzeichnet, daß die Daten zu signierende Dateien sind, die am Bildschirm (2) des Terminals (10) durch die Bearbeitungssoftware, vorzugsweise im Format einer Text-, Tabellen-, Kalkulations-, Grafik oder Bankdatei angezeigt werden, daß die Datei gegebenenfalls nach Authentifizierung des Benutzers, z.B. durch Eingabe eines Benutzercodes über die Tastatur oder über eine Vorrichtung zur biometrischen Benutzerauthentifizierung im Terminal auf Veranlassung des Benutzers einem Signaturvorgang unter Verwendung eines vom Benutzer dein Terminal (10) übergebenen oder im Terminal fix integrierten Signaturtokens, vorzugsweise einer Smart Card, unterworfen wird und daß die signierte Datei an das Computersystem (5) zurückgegeben wird.

9. Verfahren nach Anspruch 7, dadurch gekennzeichnet, daß die Daten Daten für einen elektronischen Zahlungsvorgang sind und durch die Bearbeitungssoftware am Bildschirm (2) des Terminals (10) angezeigt werden, daß die Daten gegebenenfalls nach Authentifizierung des Benutzers, z.B. durch Eingabe eines Benutzercodes über die Tastatur oder über eine Vorrichtung zur biometrischen Benutzerauthentifizierung auf Veranlassung des Benutzers bestätigt werden und daß die bestätigten Daten für einen elektronischen Zahlungsvorgang mit dem elektronischen Zahlungsmittel des Benutzers herangezogen werden.
